# EUROPEAN PATENT APPLICATION

(11) **EP 0 915 009 A1**
(43) Date of publication of application: **12.05.1999**
(21) Application number: 97119440.2
(22) Date of filing: 06.11.1997
(51) Int. Cl.: B62M 11/14

(54) **Speed change gear system for bicycle**

(71) Applicant: YAMAHA HATSUDOKI KABUSHIKI KAISHA, Iwata-shi Shizuoka-ken, 438 (JP)
(72) Inventor: Nagase, Takeshi, Iwata-Shi, Shizuoka-Ken 438 (JP); Moriya, Takao, Iwata-Shi, Shizuoka-Ken 438 (JP)
(74) Representative: Grünecker, Kinkeldey, Stockmair & Schwanhäusser Anwaltssozietät

(57) **Abstract**

The present invention relates to a speed change gear system with a planetary gear mechanism (19) comprising a sun gear (20) which is releasably brought into locking engagement with a casing (10) for effecting a desired speed. The releasable locking engagement with the sun gear (20) is achieved by a locking means (28) at a position radially outward of the toothed portion of the sun gear (20).

## Description

### Field of the Invention

The present invention relates to a speed change gear system for bicycles.

### [Prior Art]

A speed change system has been disclosed in Japanese Unexamined Patent Publication Hei 4-17788.

In this system, a casing is mounted a body frame of a bicycle; there is provided a pedal crankshaft passing through the casing laterally of the bicycle and supported thereon for rotation about its axial center; and & pedal is fitted to either end of the pedal crankshaft through a crank arm. Inside the casing is provided a planetary gear mechanism for drivingly connecting the pedal crankshaft to a rear wheel.

The planetary gear mechanism is composed of a sun gear supported on said pedal crankshaft for rotation about the axial center thereof, a carrier rotatable together with said pedal crankshaft, planetary gears supported on said carrier for rotation and engaged with said sun gear. and a ring gear supported on said pedal crankshaft for rotation about the axial canter thereof and engaged with said planetary gears. In this system is also provided a locking means for bringing the sun gear into releasable locking engagement with the casing through external operatirig force.

The locking means is composed of a locked section formed in the inside circumference of the sun gear, and a locking section supported on the casing and releasably engageable with the locked section through operating force for preventing rotation of the sun gear. When a driver sitting on the saddle applies pedal force alternately to pedals to send power to the pedal crankshaft, the power is transmitted to the rear wheel through the planetary gear mechanism, causing the rear wheel to be revolved, thereby resulting in the bicycle running on a road surface.

When the sun gear is brought into or out of locking engagement with the casing through operation to the locking means during running, the power from the pedal to the rear wheel will be changed of its speed to a desired level in the planetary gear mechanism.

### [Problem to be Solved by the Invention]

However, in the conventional system, the locked section is formed in the inside circumference of the sun gear, and the engaging position of the locked section with the locking section is located close to the dial center of the pedal crankshaft. Therefore, considering the moment balance around the axial center, the engaging force between both sections amounts to a great value at the engaging position.

Thus, if the speed changing state or the locking state in which the locked section is in engagement with the locking section, is released during running, great operating force is necessary, posing a problem of heavy speed changing operation.

In view of the foregoing, an object of this invention is to provide a speed change gear system for bicycles capable of effecting light speed changing operation during running.

Another object of this invention is to provide a speed change gear system for bicycles of a compact type capable of effecting easy arrangement in a bicycle with a small body space and preventing interference with the driver. According to the invention, the above mentioned objects are achieved with a speed change gear system and are defined in claim 1. Preferred embodiments of the inventive speed change gear system are defined in claims 2 to 9.

### [Embodiment]

Embodimens of this invention will be described below with reference to the accompanying drawings.

### [A First Embodiment]

Figs. 1-5 are views of a first embodiment.

In Fig. 2, numeral 1 represents a bicycle, and arrow Fr indicates the forward direction. Terms "the right and the left" In the following description indicate lateral directions of the bicycle as seen in the forward direction.

The bicycle 1 has a body frame 2, on the front end of which is supported a front fork 3 for steering movement. At the lower end of the front fork 3 is supported a front wheel 4 for rotation, and at the upper end of the same is mounted a handle 5 of a bar type. At the rear end of the body frame 2 is supported a rear wheel 6 for rotation, and the body frame 2 is supported on a road surface 7 by the front and rear wheels 4, 6. In the longitudinal middle portion of the body frame 2 at the top end is mounted a saddle 8, which serves as a driver's seat.

In the longitudinal middle portion of the body frame 2 at the bottom is mounted a cast casing 10. Passing through the casing 10 laterally of the bicycle, is provided a pedal crankshaft 12 supported on the casing 10 for rotation about the axial center 11 extending laterally. Both ends of the pedal crankshaft 12 protrude outwardly from the casing, to which ends are fitted crank arms 13 perpendicular to the pedal crankshaft in the opposite directions, respectively. At the projecting ends of the crank arms 13 are fitted pedals 14.

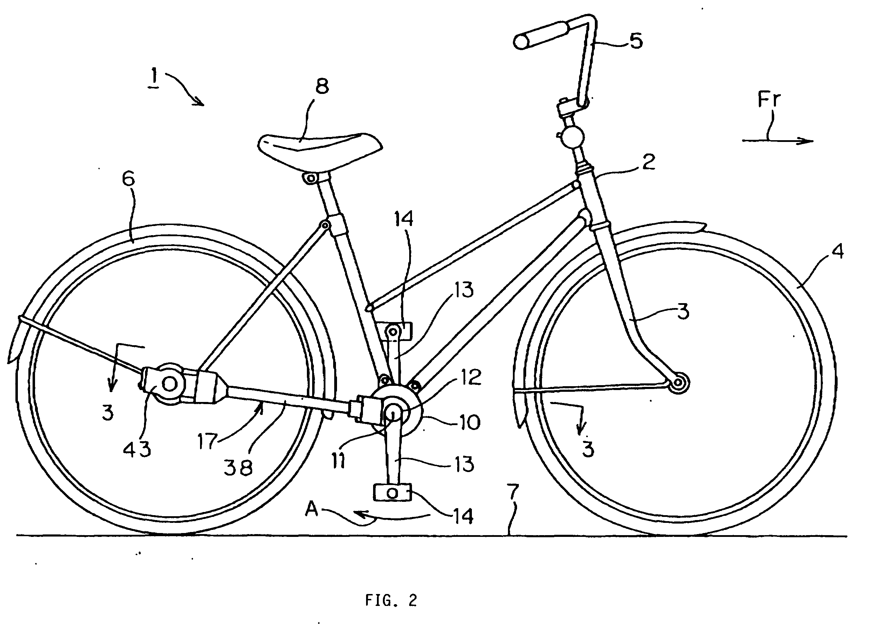

The pedals 14 will be driven alternately by the driver sitting on the saddle 8. Power generated by pedaling is transmitted to the pedal crankshaft 12 through crank arms 13, causing the pedal crankshaft 12 to be rotated about its axial center 11 (arrow A in Fig. 2).

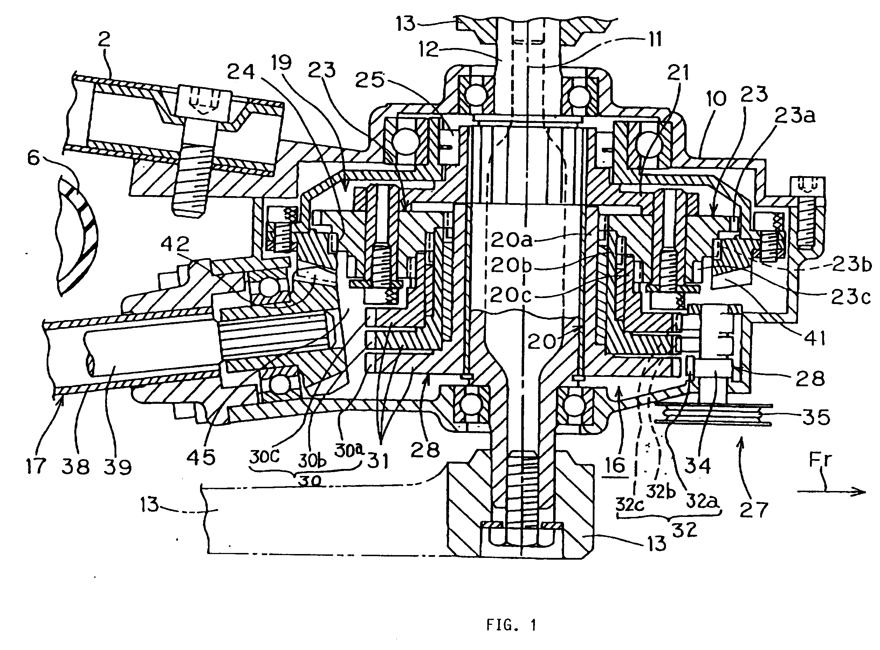

In Figs. 1-5, inside the casing 10 is provided a speed change gear system 16, and at the right side of the rear wheel 6 is disposed a power transmission 17 extending longitudinally. The power applied to the pedal crankshaft 12 by the driver is transmitted successively through the speed change gear system 16 and the power transmission 17 to the rear wheel 6, causing the rear wheel 6 to be revolved, resulting in the bicycle 1 running on the road surface 17 forwardly.

The speed change gear system 16 is provided, inside the casing 10, with a planetary gear mechanism 19 fitted on the axial center 11. The planetary gear mechanism 19 has a sun gear 20 supported on the pedal crankshaft 12 for rotation about its trial center 11. The sun gear 20 is composed of a plurality of (three) sun gears 20a-20c on the axial center 11, which are disposed at substantially the same axial position of the pedal crankshaft 12, coaxially with each other in a multipipe-like manner.

The innermost sun gear 20a of the sun gears 20a-20c is supported on the pedal crankshaft 12 through a bush, the intermediate sun gear 20b on the innermost sun gear 20a through a bush, and the outermost sun gear 20c on the intermediate sun gear 20b through a bush. That is, the sun gears 20a-20c are rotatable relative to each other about the axial center 11a and are supported on each other.

The sun gears 20a-20c have respective pitch circles of different diameters, that is, of a larger, an intermediate, and a smaller diameter, respectively, and their toothed portions are arranged close to each other coaxially with the pedal crankshaft 12.

The planetary gear mechanism 19 is provided with a carrier 21 rotatable together with the pedal crankshaft 12, which is disposed adjacent to the sun gear 20 in the axial direction of the pedal crankshaft. On the sun gear side of the carrier 21 are disposed a plurality of (three) planetary gears 23 circumferentially at regular intervals around the axial center 11, which are supported on the carrier 21 for rotation about respective axial centers. Each planetary gear 23 is composed of a plurality of (three) planetary gears 23a-23c located at a respective axial center, which are disposed axially in series and formed in one body, that is, rotatable as a unit.

The planetary gears 23a-23c are disposed, in series, at places corresponding to the sun gears 20a-20c, respectively, The planetary gears 23a-23c have respective pitch circles of different diameters, that is, of a larger, an intermediate, and a smaller diameter, respectively, and are engaged with respective corresponding sun gears 20a-20c.

The planetary gear mechanism 19 is provided with an internal ring gear 24 supported on the pedal crankshaft 12 through the carrier 21 for rotation about the axial center 11, and the ring gear 24 is engaged with the planetary gear 23b. In this case, an one way-clutch 25 is disposed between the carrier 21 and the ring gear 24, and is adapted to transmit power exclusively from the carrier 21 to the ring gear 24.

There is provided a speed changing operation device 27 for controlling the planetary gear mechanism 17 into a desired speed changing state through operating force from outside the speed change gear system 16, that is, operating force by a driver.

The speed changing operation device 27 is provided with a locking means 28 for selectively bringing any of the sun gears 20a-20c into releasable locking engagement with the casing 10 through the operating force. The locking means 28 is provided with locked rotary bodies 31 rotatable about the axial center 11 together with respective sun gears 20a-20c and having a plurality of circumferential locked sections 30 at their peripheral portions. These locked rotary bodies 31 are formed integral with the sun gears 20a-20c, respectively, and the locked sections 30 have pich circles of a same size. The locked rotary bodies 31 are disposed, in series, close to each other axially of the pedal crankshaft 12, and are located opposite the carrier 21 with respect to the planetary gears 23 as seen axially of the pedal crankshaft 12.

The locking means 28 is provided with a plurality of locking sections 32 movably supported on the casing 10 and selectively releasably engageable with the locked sections 30 for preventing rotation of the sun gears 20a-20c together with the locked rotary bodies 31.

A cam roller 34 is provided which is adapted to be in cam-contact with the locking sections 32, and a wire 35 is provided for connecting the cam roller 34 to a speed change lever (not shown) mounted on the handle 5.

When the speed change lever is operated and operating force transmitted through the wire 35 rotates the cam roller 34, causing associated movement of the locking sections 32a-32c, the locking sections 32a-32c rotate individually about the axial center of the cam roller 34 to be selectively brought into releasable engagement with locked sections 30a-30c, preventing or allowing rotation of any of the sun gears 20a-20c together with the locked rotary body 31

That is, when operating force on the speed change lever is transmitted through the wire 35, causing the cam roller 34 to rotate, and the locking sections 32a-32c are associated with the movement of the cam roller so as to be out of engagement with any of the locked sections 30a-30c, then the power applied to the pedal crankshaft 12 is transmitted from the carrier 21 to the ring gear 24 through the one-way clutch 25. This speed changing state is a state of the first speed.

Further, when operating force on the speed change lever is transmitted through the wire 35, causing the cam roller 34 to rotate, and the locking sections 32a-32c are associate with the movement of the cam roller so that the locking sections 32b and 32c are brought out of engagement with the locked sections 30b and 30c against the bias of a plate spring 46, then only the locking section 32a is pressed down by a plate spring 46 to be engaged with the locked section 30c, preventing the rotation of the sun gear 29a of the sun gears 20a-20c. Thus, the planetary gears 23a-23c are moved around the sun gear 20a while rotating on their axes. As a result, the ring gear 24 in engagement with the planetary gear 23b rotates faster than the carrier 21. This speed changing state is a state of the second speed.

Furthermore, when operating force on the speed change lever is transmitted through the wire 35, causing the cam roller 34 to rotate, and the locking sections 32a-32c are associate with the movement of the cam roller so that the locking section 32c is brought out of engagement with the locked section 30c against the bias of a plate spring 46, then the locking section 32a and 32b are pressed down by the plate spring 46 to be engaged with the locked section 30a and 30c, respectively. In this case, from the relation between the numbers of the teeth of the sun gears 20a, 20b and those of the planetary gears 23a, 23b in engagement with the sun gears, the sun gear 20a will rotates in a direction opposite to that in which it is engageable with the locking section 32a, so that only the locking section 32b will be engaged with the locked section 30b. As a result, only the rotation of the sun gear 20b of the sun gears 20a-20c is prevented. Therefore, the planetary gears 23a-23c are moved around the sun gear 20b at a speed faster than that of the second speed changing state while rotating on their axes. Thus, the ring gear 24 in engagement with the planetary gear 23b revolves faster than the carrier 21. This speed changing state is a state of the third speed.

Even in this third speed changing state, the ring gear 24 revolves faster than the carrier 21, so that the one-way clutch 25 runs idle and the power applied to the pedal crankshaft 12 fails to be transmitted from the carrier 21 to the ring gear 24 through the one-way clutch 25.

Yet further, when operating force on the speed change lever is transmitted through the wire 35, causing the cam roller 34 to rotate, and the locking sections 32a-32c are associate with the movement of the cam roller so that all the locking sections 32a-32c are pressed down by the plate spring 46 to be engaged with the locked sections 30a-30c, then from the relation between the numbers of the teeth of the sun gears 20a-20c and those of the planetary gears 23a-23c in engagement with the sun gears, the sun gear 20a, 20b will revolve in a direction opposite to that in which they are engageable with the locking section 32a, 32b, whereby only the locking section 32c will be engaged with the locked section 30c. As a result, the rotation of the sun gear 20c is prevented. Therefore, the planetary gears 23a-23c are moved around the sun gear 20c at a speed faster than that of the third speed changing state while rotating on their axes. Thus, the ring gear 24 in engagement with the planetary gear 23b revolves faster than the carrier 21. This speed changing state is a state of the fourth speed.

Even in this fourth speed changing state, the ring gear 24 revolves faster than the carrier 21, so that the one-way clutch 25 runs idle and the power applied to the pedal crankshaft 12 fails to be transmitted from the carrier 21 to the ring gear 24 through the one-way clutch 25.

As described in detail above, desired speed changing states can be achieved by way of the planetary gear mechanism 19.

The power transmission 17 has a transmission case 38 connected at its front to the casing 10, and supported at its rear on the rear end of the body frame 2. In the power transmission case 38 is supported a power transmission shaft 39 extending longitudinally, for rotation about its axial center.

The ring gear 24 is formed with a drive bevel gear 41. At the front end of the power transmission shaft 39 is supported a driven bevel gear 42 in engagement with the drive bevel gear 41, and at the rear end of the power transmission shaft 39 is connected the rear wheel 6 to a set of bevel gears 43.

The power from the pedal 14, after changed of its speed in a desired speed changing state through the planetary gear mechanism 19 of the speed change gear system 16, is transmitted from the ring gear 24 to the rear wheel 6 successively through the drive bevel gear 41, driven bevel gear 42, power transmission shaft 39, and a set of bevel gears of the power transmission 17.

In this case, the locked section 30 of the locked rotary body 31 is arranged radially outwardly of the toothed portions of the sun gears 20a-20c.

Therefore, compared with the conventional locked section being formed in the inside circumference of the sun gear, engaging position of the locked section 30 with the locking section 32 is located away from the axial center 11 of the pedal crankshaft 12, so that considering the moment balance around the axial center 11 of the pedal crankshaft 12, the engaging force between both sections 30, 32 will be smaller at the engaging position.

Therefore, only a small operating force is necessary in releasing, during running, the speed changing state, that is, the engaging state in which the locked section 30 is engaged with the locking section 32.

Further, as described above, the sun gears 20a-20c are disposed at substantially the same axial position of the pedal crankshaft 12, coaxially with each other in a multipipe-like manner, and are supported on each other.

Therefore, these sun gears 20a-20c are arranged compact axially and radially of the pedal crankshaft 12 compared with usual arrangement of the sun gears 20a-20c, that is, the speed change gear system 16 can be made compact.

Furthermore, the locked rotary bodies 31 are disposed close to each other axially of the pedal crankshaft 12, and the locking means 28 is made compact, therefore the speed change gear system 16 can be made compacter.

Yet further, the locked section 30 of the locked rotary body 31 is disposed in the space 45 surrounded by the pedal crankshaft 12, planetary gears 23, drive bevel gear 41, and driven bevel gear 42.

Therefore, when the planetary gear mechanism 19 is provided with planetary gears 23 and the ring gear 24 of the planetary gear mechanism 19 is connected to the rear wheel 6 through drive and driven gears 41, 42, the space surrounded by the pedal crankshaft 12, planetary gears 23, drive bevel gear 41, and driven bevel gear 42 is put to effective use for arrangement of the locked rotary body 31, so that the speed change gear system 16 can be made compacter.

Still further, the locked section 30 is disposed close to the driven bevel gear 42 radially of the pedal crankshaft 12.

Therefore, the locked section 30 is located further away from the axial center 11 of the pedal crankshaft 12 while avoiding interference with the driven bevel gear 42, so that considering the moment balance around the dial center 11 of the pedal crankshaft 12, the engaging force between the locked section 30 and the locking section 32 will be smaller at the engaging position.

### [A Second Embodiment]

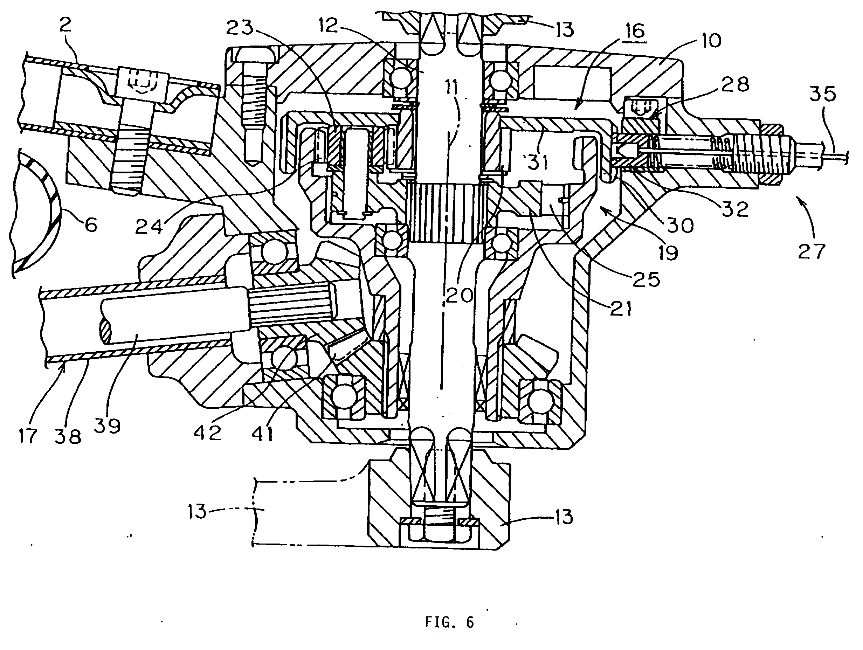

Fig. 6 shows the second embodiment.

In this embodiment, when the speed change lever is operated and the operating force is transmitted to the wire 35, causing associated movement of the locking section 32, then the locking section 32 is brought into releasable engagement with the locked section 30, preventing or allowing the rotation of the sun gear 20 together with the locked rotary body 31.

When the operating force on the speed change lever applied to the wire 35, causing associated movement of the locking section 32 and bringing the locking section 32 out of engagement with the locked section 30, then the power applied to the pedal crankshaft 12 is transmitted from the carrier 21 to the ring gear 24 through the one-way clutch 25. This speed changing state is a state of the first speed.

Further, when the speed change lever is operated and the operating force is transmitted to the wire 35, causing associated movement of the locking section 32 and bringing the locking section 32 into engagement with the locked section 30, then rotation of the sun gear 20 is prevented. Thus, the planetary gears 23 is moved around the sun gear 20 while rotating on its axes. As a result, the ring gear 24 in engagement with the planetary gear 23 rotates faster than the carrier 21. This speed changing state is a state of the second speed.

In this second speed changing state, the ring gear 24 revolves faster than the carrier 21, so that the one-way clutch 25 runs idle and the power applied to the pedal crankshaft 12 fails to be transmitted from the carrier 21 to the ring gear 24 through the one-way clutch 25.

In this embodiment, the locked section 30 is located radially outwardly of the toothed portion of the sun gear 20 and the ring gear 24.

Thus, the engaging force between the locked section 30 and the locking section 32 can be made smaller.

Further, the meshing engagement position of the sun gear 20 with the planetary gear 23, and the locking engagement position of the locked section 30 with the locking section 32, are located at substantially the same position axially of the pedal crankshaft 12. Therefore, distorsion of the sun gear 20 can be prevented, providing the advantage of higher strength.

Other constructions are the same as in the first embodiment. Thus, like parts are designated by like reference numerals, and detailed descriptions are omitted.

Compared with the conventional locked section being formed in the inside circumference of the sun gear, engaging position of the locked section with the locking section 32 located away from the axial center 11 of the pedal crankshaft, so that considering the moment balance around the axial center of the pedal crankshaft, the engaging force between both sections will be smaller at the engaging position.

Therefore, only a small operating force is necessary in releasing, during running, the speed changing state, that is, the engaging state in which the locked section is engaged with the locking section.

According to this invention of claim 2, these sun gears are arranged compact axially and radially of the pedal crankshaft compared with usual arrangement of the sun gears, that is, the speed change gear system can be made compact.

Therefore, a speed change gear system for will be provided capable of effecting easy arrangement in a bicycle with a small body space and preventing interference with the driver.

According to this invention of claim 3, then the planetary gear mechanism 19 is provided with planetary gears and the ring gear of the planetary gear mechanism is connected to the rear wheel through drive and driven gears, the space surrounded by the pedal crankshaft, planetary gears, and driven bevel gear is put to effective use for arrangement of the locked rotary body, so that the speed change gear system 16 can be made compacter.

As a result, desirable effects the same as those in the claim 2 can be produced.

### [Brief Description of the Drawings]

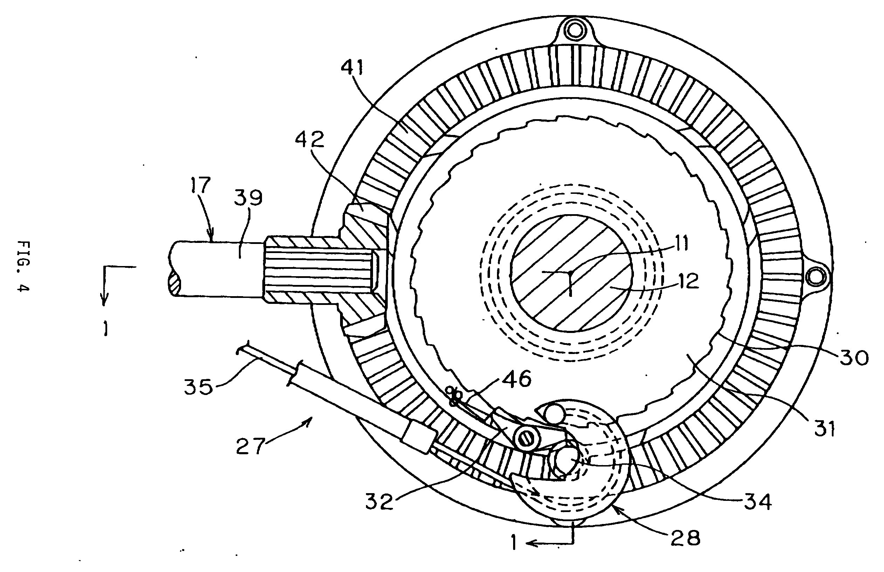

Fig. 1 is a sectional view of the first embodiment, taken along line 1-1 of Fig. 4.
Fig. 2 is a general right side view of a bicycle of the first embodiment.

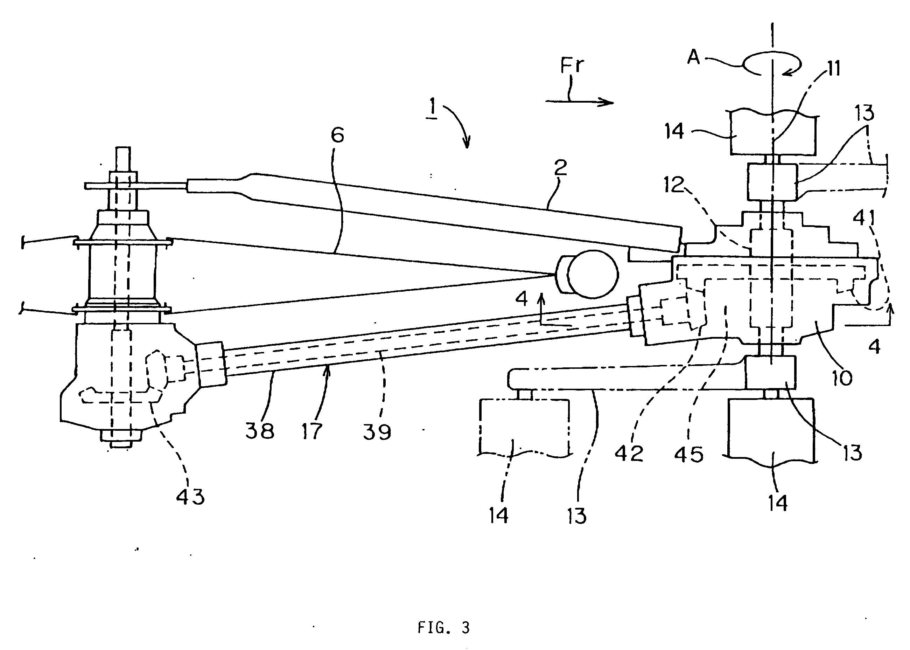

Fig. 3 is a view of the first embodiment, taken along line 3-3 of Fig. 2.
Fig. 4 is a sectional view of the first embodiment, taken along line 4-4 of Fig. 3.

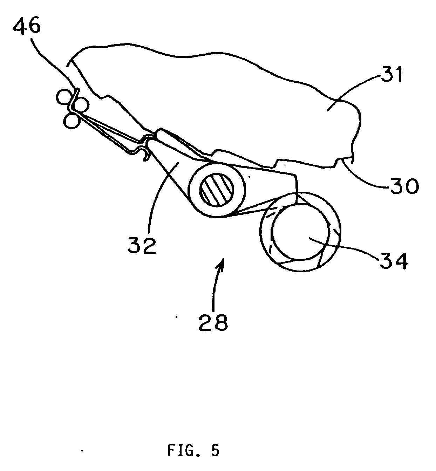

Fig. 5 is a partial enlarged view of Fig. 4.
Fig. 6 is a view of the second embodiment, corresponding to Fig. 1.

## Claims

1. A speed change gear system for bicycles comprising:
- a casing (10) mounted on a frame body (2);
- a pedal crankshaft (12) passing through said casing (10) laterally of said bicycle (1);
- a planetary gear mechanism (19) drivingly connecting said pedal crankshaft (12) to a wheel (6) and including a sun gear (20) supported on said pedal crankshaft (12) for rotation about the axial center (11) thereof;
- a locking means (28) for bringing said sun gear (20) into releasable locking engagement with said casing (10);
**characterized in that** said locking means (28) is in a releasable engagement with said sun gear (20) at a position radially outward of the toothed portion of said sun gear (20).

2. A speed change gear system according to claim 1, **characterized in that** said locking means (28) comprising a locked rotary body (31) rotatable together with said sun gear (20) about said axial (11) and having a locked section (30) at the peripheral portion.

3. A speed change gear system according to claim 1 or 2, **characterized in that** the locking means (28) comprising a locking section (32) supported on said casing (10) and releasably engageable with said locked section (30).

4. A speed change gear system according to any of the preceding claims, **characterized in that** further comprising a plurality of sun gears (20a, 20b,20c) having respective pitch circles of different diameter and rotatable relative to each other, said locking means (28) being adapted to bring one of said sun gears (20a,20b,20c) into selective locking engagement with said casing (10).

5. A speed change gear system according to claim 4, **characterized in that** said sun gears (20a,20b,20c) are fitted on said pedal crankshaft (12), coaxially with each other in a multipipe-like manner, at substantially the same axial position, and are supported on each other.

6. A speed change gear system according to any of the preceding claims, **characterized in that** said locked section (30a,30b,30c) of said locked rotary body (31) is disposed in a space surrounded by said pedal crankshaft (12), planetary gears (23) and a driven bevel gear (42), being drivingly connected to said wheel (6).

7. A speed change gear system according to claim 6, **characterized in that** the planetary gear mechanism (19) comprises a carrier (21) rotable together with said pedal crankshaft (12) for supporting said planetary gears (23) for rotation and engaged with the said sun gear (20), and a ring gear (24) supported on said pedal crankshaft (12) for rotation about the axial center (11) thereof and engaged with said planetary gears (23), wherein said ring gear (24) is formed with a drive bevel gear (41), which is in meshing engagement with said driven bevel gear (42), which is provided opposite said earner (21) with respect to said planetary gear (23a,23b,23c) as seen in the axial direction of said pedal crankshaft (12).

8. A speed change gear system according to any of the preceding claims, **characterized in that** the locking section (32a,32b,32c) is rotatably supported on said casing (10).

9. A speed change gear system according to any of the preceding claims 1 to 7, **characterized in that** the locking section (32) is slidably supported on said casing (10).
